# EUROPÄISCHE PATENTSCHRIFT

(11) **EP 1 553 732 B1**
(45) Veröffentlichungstag und Bekanntmachung des Hinweises auf die Patenterteilung: **05.10.2016**
(21) Anmeldenummer: 04090437.7
(22) Anmeldetag: 16.11.2004
(51) Int. Cl.: H04L 12/403, H04J 3/06, H04J 3/14

(54) **Verfahren und Vorrichtung zum Hochfahren eines Knotens eines Kommunikationssystems**
Method and arrangement for starting a node in a communication system
Procédé et dispositif de démarrage d'un noeud dans un système de communication

(30) Priorität: 09.12.2003 DE 10358248
(43) Veröffentlichungstag der Anmeldung: 13.07.2005
(73) Patentinhaber: Volkswagen Aktiengesellschaft, 38440 Wolfsburg (DE)
(72) Erfinder: DÖRING, Martin, 38124 Braunschweig (DE); HOPPMANN, Michael, 38176 Wendeburg (DE); ZIMMERMANN, Axel, 26446 Friedeburg (DE)
(74) Vertreter: Patentanwälte Bressel und Partner mbB

(56) Entgegenhaltungen:
- WO-A1-00/43857
- US-A- 6 145 008
- STEINER ET AL: "Multiple failure correction in the time-triggered architecture", OBJECT-ORIENTED REAL-TIME DEPENDABLE SYSTEMS, 2003. PROCEEDINGS. NINTH IEEE INTERNATIONAL WORKSHOP ON 1-3 OCT. 2003, PISCATAWAY, NJ, USA,IEEE, 1. Oktober 2003 (2003-10-01), - 3. Oktober 2003 (2003-10-03), Seiten 347-354, XP031099437, Anacapri, Italy DOI: DOI:10.1109/WORDS.2003.1267551 ISBN: 978-0-7695-2054-4
- LONN H ED - GOUDA M G (ED): "INITIAL SYNCHRONIZATION OF TDMA COMMUNICATION IN DISTRIBUTED REAL-TIME SYSTEMS", PROCEEDINGS OF THE 19TH INTERNATIONAL CONFERENCE ON DISTRIBUTED COMPUTING SYSTEMS. ICDCS '99. AUSTIN, TX, MAY 31 - JUNE 4, 1999; [INTERNATIONAL CONFERENCE ON DISTRIBUTED COMPUTING SYSTEMS], LOS ALAMITOS, CA : IEEE COMPUTER SOC, US, 31. Mai 1999 (1999-05-31), Seiten 370-379, XP000883615, DOI: DOI:10.1109/ICDCS.1999.776539 ISBN: 978-0-7803-5706-8
- STEINER W ET AL: "The transition from asynchronous to synchronous system operation: an approach for distributed fault-tolerant systems", PROCEEDINGS OF THE 22ND. INTERNATIONAL CONFERENCE ON DISTRIBUTED COMPUTING SYSTEMS. ICDCS 2002. VIENNA, AUSTRIA, JULY 2 - 5, 2002; [INTERNATIONAL CONFERENCE ON DISTRIBUTED COMPUTING SYSTEMS], LOS ALAMITOS, CA : IEEE COMP. SOC, US, Bd. CONF. 22, 2. Juli 2002 (2002-07-02), Seiten 297-304, XP010595544, ISBN: 978-0-7695-1585-4

## Beschreibung

Die Erfindung bezieht sich auf ein Verfahren und eine Vorrichtung zum Hochfahren mindestens eines Knotens eines mindestens teilweise zeitgesteuerten Kommunikationssystems mit einem statisch vorgegebenen Ablaufplan.

Ein Kommunikationssystem mit statisch vorgegebenem Ablaufplan weist ein periodisches Übertragungsmuster auf. Ein Periodenzyklus ("cycle") umfasst eine bestimmte Anzahl an Zeitschlitzen ("slots"), die in fester Reihenfolge abgearbeitet werden. Nachrichten werden von einem Knoten des Kommunikationssystems in einem Frame gesendet. Ein Knoten kann eine Vielzahl an unterschiedlichen Frames innerhalb eines Periodenzyklus senden. Jede Nachricht, die im Gesamtsystem jemals gesendet werden kann, bekommt einen bestimmten Zeitschlitz zugeordnet. Den Zeitschlitzen sind Kennungen ("Slot-IDs") zu geordnet. Ein Knoten sendet einen Frame, wenn eine Kennung des Frames ("Frame-ID") mit der Kennung des Zeitschlitz ("Slot-ID") korrespondiert. Findet sich keine passende Frame-ID, so bleibt der entsprechende Zeitschlitz in dem Periodenzyklus leer. Das Kommunikationssystem umfasst eine beliebige Anzahl an Knoten, wobei Basis-Systeme mit einer geringen Anzahl an Knoten und/oder belegten Zeitschlitzen, Mid-Systeme und Highend-Systeme mit einer maximalen Anzahl an Knoten und/oder belegten Zeitschlitzen unterschieden werden.

Die definierte Sendezeit jedes Frames verhindert, dass ein gestörter Sender, ein so genannter "Babbling Idiot", den Bus im normalen Betriebsmodus mit Nachrichtenmüll blockiert. Allerdings verlängern Zeitschlitze mit starrer Sendezeit im Normalfall den Zyklus.

Ein Kommunikationssystem mit den beschriebenen Merkmalen ist beispielsweise FlexRay. Für eine Steigerung der Flexibilität kombiniert FlexRay ein statisch zeitsynchronisiertes Übertragungs-Protokoll, das FlexRay Protokoll, mit einem dynamischen Protokoll, dem aufgrund von Ereignissen gesteuerten Byteflight Protokoll. Je nach Einsatzgebiet des FlexRay Systems kann ein Verhältnis zugeteilter Übertragurigszeiten beider Protokolle gewählt werden oder sogar auf eins der Protokolle verzichtet werden.

Knoten senden auf einem Bus, umfassend einen Kanal oder mehrere Kanäle. Sicherheitsrelevante Systems arbeiten aufgrund einer geforderten Redundanz mit zwei oder mehr Kanälen. Um eine asynchrone Übertragung zu ermöglichen, müssen bei einer Übertragung auf mehreren Kanälen alle Zeitschlitze die gleiche Länge aufweisen.

Zum selbständigen Hochfahren eines oder mehrerer Knoten des Kommunikationssystems wird ein sogenannter "Start-up" durchgeführt. Ziel des "Start-ups" ist es, das System kommunikationsbereit zu machen und die im System eingebundenen, aktiven Knoten sowie gegebenenfalls alle vorhandenen Kanäle zu synchronisieren. Besteht der Kommunikationszyklus nur aus einem dynamischen Teil, sendet ein vordefinierter "Busmaster" (ein ausgewählter Knoten) ein Synchronisations-Signal.

Für den "Start-up" sendet ein erster Knoten nach einem Einschalten und/oder einem Reset einen Frame. Um festzustellen, ob nicht bereits ein anderer Knoten sendet und/oder bereits eine synchronisierte Kommunikation vorhanden ist, sendet der aktivierte Knoten erst nach einer festgelegten Wartezeit ("Start-up-Timeout"). Findet bereits eine Kommunikation statt, so integriert sich der Knoten in die vorhandene Kommunikation. Andernfalls sendet der aktivierte Knoten seinen Frame zum Starten einer synchronisierten Kommunikation. Nach dem Senden wartet der Knoten auf eine Bestätigung von mindestens einem empfangenden Knoten. Erhält er innerhalb einer bestimmten Zeit keine Bestätigung, sendet er den Frame erneut. Dieser Vorgang wird wiederholt, bis mindestens eine erwartete Bestätigung von mindestens einem zweiten am "Start-up" beteiligten Knoten empfangen wird. Nach dem Empfang der Bestätigung kann das System in den normalen Betriebszustand ("Normal Operation Mode") mit vorgegebenem Kommunikationszyklus wechseln.

Dabei ist es bekannt, nicht alle Knoten eines Kommunikationssystems mit einer "Start-up" Funktion auszubilden. Insbesondere bei Kommunikationssystemen die auf mehreren Kanälen senden, sollten nur Knoten an einem "Start-up" beteiligt sein, die auf allen Kanälen senden. Weitere Knoten werden nur in eine bereits synchronisierte Kommunikation eingebunden.

Insbesondere im Automobilbereich und anderen sicherheitsrelevanten Anwendungsgebieten ist eine hohe Präzision der Zeitsynchronisation gefordert mit einer maximalen Abweichung von 1 Mikrosekunde.

Der "Start-up" sollte zudem eine Fehlertoleranz aufweisen. Fehlertoleranz ist definiert als die Fähigkeit eines Systems, auch mit einer begrenzten Zahl fehlerhafter Subsysteme seine spezifizierte Funktion zu erfüllen. Die Anzahl tolerierbarer fehlerhafter Knoten im "Start-up" ist abhängig von der Anzahl der Knoten mit "Start-up" Funktion. Je mehr Knoten in ein "Start-up" eingebunden werden, desto robuster ist das System gegen Ausfälle einzelner Kommunikationsteilnehmer.

Sind mehr als zwei Knoten an einem "Start-up" beteiligt, so ist für einen Wechsel in den "Normal Operation Mode" Konsistenz erforderlich. Konsistenz ist dabei definiert als übereinstimmende "Meinung" der Knoten über den zeitlichen Status des Systems, d.h. eine zeitliche Synchronisation der aktiven Knoten.

Sind mehr als drei Knoten an einem "Start-up" beteiligt, so besteht die Gefahr einer Cliquenbildung. Eine Clique ist definiert als eine Gruppe konsistenter Knoten, d.h. eine Gruppe aktiver Knoten, welche miteinander zeitlich synchronisiert sind. Eine Clique ist in sich konsistent, jedoch nicht hinsichtlich des Gesamtsystems aller aktiven Knoten Ein Wechsel in den "Normal Operation Mode" trotz vorhandener Cliquen führt zu einer fehlerhaften Kommunikation, da das Gesamtsystem nicht konsistent ist, d.h. keine zeitliche Synchronisation aller aktiven Knoten gegeben ist.

Der Erfindung liegt daher das technische Problem zugrunde, ein Verfahren und eine Vorrichtung zu schaffen, durch welche ein fehlerfreier Übergang in einen normalen Betriebsmodus aus einer "Start-up" Phase gewährleistet wird.

Die Druckschrift STEINER ET AL: "Multiple failure correction in the time-triggered architecture", OBJECT-ORIENTED REAL-TIME DEPENDABLE SYSTEMS, 2003. PROCEEDINGS. NINTH IEEE INTERNATIONAL WORKSHOP ON 1-3 OCT. 2003, PISCATAWAY, NJ, USA,IEEE, 1. Oktober 2003 (2003-10-01), - 3. Oktober 2003 (2003-10-03), Seiten 347-354, Anacapri, Italy DOI:10.1109/WORDS.2003.1267551, ISBN: 978-0-7695-2054-4; offenbart die Oberbegriffe der unabhängigen Ansprüche.

Die Lösung des Problems ergibt sich durch die Gegenstände mit den Merkmalen der Patentansprüche 1 und 6. Weitere vorteilhafte Ausgestaltungen der Erfindung ergeben sich aus den Unteransprüchen.

Hierfür wird bei einem Hochfahren eines oder mehrer Knoten eines Kommunikationssystems einem Aufruf von Funktionen eines normalen Betriebsmodus ("Normal Operation Mode") mindestens eine Erkennung von Cliquen vorangestellt. Liegen nach einem "Start-up" mehrere Cliquen vor, so ist kein fehlerfreier Start der Funktionen im normalen Betriebsmodus sichergestellt. Eine Cliquenbildung ist sowohl beim Hochfahren eines Knotens als auch beim Hochfahren mehrerer Knoten denkbar. Sind beispielsweise drei Knoten bereits aktiviert, von welchen nur zwei zeitlich synchronisiert sind und der dritte versucht, eine neue Kommunikation zu starten, so kann sich ein vierter hochgefahrener Knoten dem dritten Knoten anschließen und mit diesem eine Clique bilden. Die Gefahr einer Cliquenbildung ist verstärkt, wenn verschiedene Kommunikationsteilnehmer gleichzeitig hochgefahren werden. Wird das Vorhandensein von mehreren Cliquen erkannt, so kann ein Umschalten in den normalen Betriebsmodus verhindert oder zumindest eingeschränkt werden. Durch einen Reset aller aktiven Knoten kann ein "Start-up" des gesamten Kommunikationssystems erneut durchgeführt werden. Es ist denkbar, bei einem Auftreten mehrer Cliquen den "Start-up" des gesamten Kommunikationssystems zu wiederholen, bis eine Kommunikation mit nur einer Clique vorliegt. Da jedoch ohne weitere Maßnahmen nicht gewährleistet werden kann, dass nach einer hinreichend geringen Anzahl an Wiederholungen des "Start-ups" ein System mit nur einer Clique vorliegt, ist ein derartige Vorgehen zur Auflösung von Cliquen nur bei sehr kleinen Systemen sinnvoll. Durch einen Reset einzelner Knoten können Cliquen gezielt aufgelöst und das System in ein System mit nur einer Clique übergeführt werden. Durch den Reset wird der "Start-up" des Knotens erneut durchgeführt und der Knoten nach Möglichkeit in die bestehende synchronisierte Kommunikation eingebunden. Durch einen Reset einzelner Knoten können auch bereits vorhandenen Funktionen in normalen Betriebsmodus mindestens teilweise aufrecht gehalten werden. Es ist auch denkbar, bei einem vorliegen mehrere Cliquen den Start des normalen Betriebsmodus lediglich zu verhindern und Eingriffe von außen anzufordern, beispielsweise indem einzelne Knoten abgeschaltet nicht aber resettet werden.

In einer bevorzugten Ausführungsform werden Cliquen aufgrund einer Störungsart und/oder-häufigkeit erkannt. Die Störungsart und/oder Häufigkeit ist beilspielsweise durch Membership-Funktionen signalisierbar und/oder erkennbar. Ein Knoten verfügt über eine lokale Sicht auf das Kommunikationssystem. Diese lokale Sicht ergibt sich durch eine Auswertung empfangener Frames. Neben einer Nachricht kann ein empfangenes und/oder ein gesendetes Frame weitere Informationen enthalten. Dazu gehören beispielsweise Statuts- und/oder Fehlerinformationen über den Empfang eines versendeten Frames durch andere Knoten. Durch diese Informationen kann ein Knoten einem anderen Knoten dessen fehlerfreie Funktion bestätigen und/oder seine fehlerfreie Funktion durch den Knoten bestätigt bekommen sowie über aufgetretene Fehler informieren und/oder verursachte Fehler informiert werden. Status- und/oder Fehlerinformationen sind beispielsweise "leeres Frame empfangen" ("Null frame received"), "keine Übertragung auf dem Bus festgestellt" ("no bus traffic detected"), "Fehler festgestellt" ("error detected"), "Beginn der Übertragung während eines laufenden Empfangs" ("start of transmission during ongoing reception"). Diese Informationen werden auch als Membership-Funktionen öder Membership-Service bezeichnet. Eine Voraussetzung für eine fehlerfreie Kommunikation zwischen Knoten ist eine zeitliche Synchronisation der Knoten. Eine mögliche Ursache für eine fehlerhafte Übertragung eines Frames ist beispielsweise ein teilweise zeitgleiches Senden eines weiteren Frames durch einen anderen, nicht zeitlich synchronisierten Knoten. Bestimmte Fehlerarten und/oder Häufigkeiten lassen so auf eine Existenz weiterer Cliquen schließen.

In einer weiteren Ausführungsform werden Cliquen durch eine Masterfunktion erkannt. Hierfür wird einem Knoten eine Masterfunktion zugewiesen. Jeder Knoten ist derart ausgebildet, dass prüfbar ist, ob er gemeinsam mit dem Knoten mit Masterfunktion eine Clique bildet. Sind alle am "Start-up" beteiligten aktiven Knoten des Kommunikationssystems in der Clique des Knotens mit Masterfunktion, so kann daraus geschlossen werden, dass daneben keine anderen Cliquen existieren. Diese Masterfunktion hat vorzugsweise keine weiteren Auswirkungen auf die Kommunikation. Insbesondere hat die Masterfunktion nicht als Folge, dass der Knoten mit Masterfunktion einen Takt vorgibt. Gibt der Knoten mit Masterfunktion den Takt vor, so kann auf Synchronisationsverfahren verzichtet werden. Als Knoten mit Maserfunktion kann beispielsweise ein Gateway Steuergerät gewählt werden.

In einer weiteren bevorzugten Ausführungsform ist durch einen Knoten feststellbar, ob sich mindestens ein Knoten einer Sollverbauliste in seiner Clique befindet Die Sollverbauliste kann über einen Knoten beispielsweise über ein Gateway Steuergerät gesendet werden. Ein Kommunikationssystem kann an unterschiedliche Anwendungen angepasst werden. Kommunikationssysteme werden beispielsweise im Automobilbereich eingesetzt. Die Ausstattung eines Fahrzeugs ist an bestimmte Wünsche und/oder Anforderungen eines Nutzers anpassbar. Um Anpassungen und/oder Nachrüstungen auch zu späteren Zeitpunkten ohne Austausch des Kommunikationssystems zu ermöglichen und/oder um für Varianten mit nur geringen Abweichungen das gleichen Kommunikationssystem einsetzen zu können, werden auch Zeitschlitze für Knoten im Ablaufplan vorgesehen, welche teilweise ungenutzt bleiben. Im Regelfall erhält ein Knoten des Kommunikationssystems jedoch keine Information über die Art und Anzahl der tatsächlich verbauten Kommunikationsteilnehmer. Durch Senden einer Sollverbauliste werden einem Knoten diese Informationen zur Verfügung gestellt. Dadurch ist es dem Knoten möglich festzustellen, ob ein fehlendes Signal von einem weiteren Knoten als Fehler zu interpretieren ist oder ob der Knoten in der Ausstattungsvariante nicht vorgesehen ist. Dadurch ist durch jeden Knoten feststellbar, ob er mit alle verbauten Kommunikationsteilnehmern konsistent ist. Daneben ist es möglich, einem bestimmten Knoten der Sollverbauliste, beispielsweise dem zweiten Knoten der Liste, eine Masterfunktion zuzuweisen. Durch einen beliebigen Knoten des Kommunikationssystems ist dann prüfbar, ob er mit dem Knoten mit Masterfunktion in einer gemeinsamen Clique ist.

In einer bevorzugten Ausführungsform erfolgt eine Auflösung von Cliquen indem mindestens ein Knoten aus einer Clique gelöst wird, dessen Frame fehlerhaft übertragen wird. Wird ein Frame eines Knotens an andere Knoten nicht fehlerfrei übermittelt, so ist dessen Zugehörigkeit zu einer Clique für die anderen Knoten seiner Clique nicht eindeutig und/oder das zugehörige Übertragungsintervall wird durch eine andere Clique gestört. Es kann daher nicht von einer fehlerfreien Einbindung des Knotens in die zeitlich synchronisierte Kommunikation ausgegangen werden.

In einer weiteren bevorzugten Ausführungsform erfolgt die Reintegration nach dem Prinzip der größten Clique. Gemäß dem Prinzip der größten Clique schließt sich ein Knoten bei einer Reintegration der größten Clique an. Dadurch wächst die größte Clique bis alle Knoten dieser Clique angehören. Die größte Clique ist dabei definiert als die Clique, welche die meisten Zeitschlitze eines Periodenzyklus belegt, Da ein Knoten mehrere Frames in einem Periodenzyklus senden kann, muss die Zahl der belegten Zeitschlitze nicht mit der Zahl der Knoten übereinstimmen.

In einer weiteren beispielhuften Form werden kleine Cliquen erkannt und aufgelöst. Nachdem erkannt wurde, dass mehrere Cliquen vorliegen, wird mindestens ein Knoten durch ein Reset aus seiner Clique gelöst und in das Kommunikationssystem reintegriert. Um Rekursionen zu vermeiden und eine schnelle Auflösung der Cliquen zu erzielen, werden vorzugsweise nur Knoten aus kleinen Cliquen gelöst und reintegriert.

Erfindungsgemäß erfolgt die Auflösung und/oder die Reintegration nach dem Prinzip der Masterclique. Ist ein Knoten mit Masterfunktion vorhanden, so ist dessen Clique Zielclique: Cliquen, die nicht Zielclique sind, werden aufgelöst und die Knoten reintegriert. Um Rekursionen und/oder Zwischenschritte zu vermeiden, erfolgt vor einer Reintegration vorzugsweise eine Überprüfung, ob die Clique Zielclique ist.

Die Erfindung wird nachfolgend anhand eines bevorzugten Ausführungsbeispiels näher erläutert. Die Figuren zeigen:
- Fig. 1:: eine schematische Darstellung eines Startups mit Cliquenerkennung und -auflösung,
- Fig. 2:: eine schematische Darstellung eines Periodenzyklus eines Kommunikationssystems,
- Fig. 3:: eine schematische Darstellung einer möglichen Cliquenbildung bei einem Kommunikationssystem mit sieben "Startup"-Knoten,
- Fig. 4: einen möglichen zeitlichen Kommunikationsverlauf des Systems aus Fig. 2.
- Fig. 5:: eine schematische Darstellung eines möglichen Ergebnis einer Reintegration und
- Fig. 6:: eine schematische Darstellung eines Szenarios zur Cliquenerkennung und Auflösung nach dem Masterprinzip.

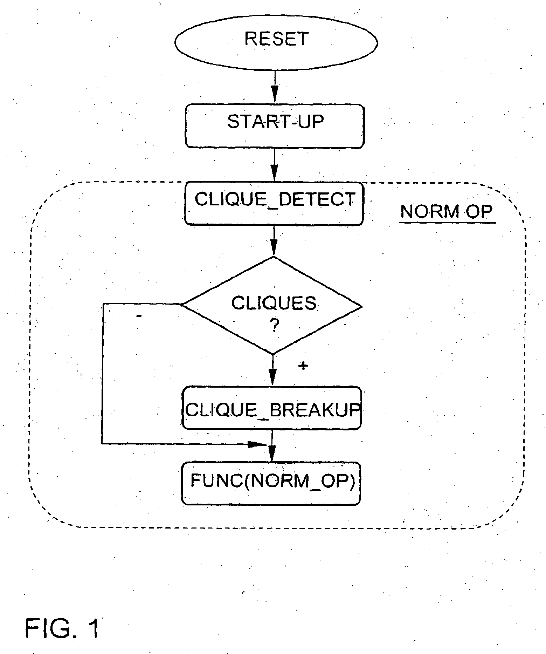

Fig. 1 zeigt schematisch den Ablauf eines Systemstarts mit Cliquenerkennung und -auflösung für ein mindestens teilweise zeitgesteuertes Kommunikationssystem. Jeder Knoten des Kommunikationssystems ist mit einem eigenen Takt- und/oder Zeitgeber ausgebildet. Für eine fehlerfreie Kommunikation müssen die Takt- und/oder Zeitgeber der Knoten synchronisiert werden. Nach einem Einschalten und/oder einem Reset RESET wird zu diesem Zweck ein "Start-up" START-UP durchgeführt. Je nach Anwendung können am "Start-up" START-UP nur einzelne Knoten berücksichtigt werden und/oder einzelne Knoten aus der "Start-up" Routine ausgeschlossen werden. Am Start-uρ" berücksichtigte Knoten können eine Kommunikation starten. Nicht am "Start-up" berücksichtigte Knoten können sich lediglich einer bereits vorhandenen Kommunikation anschließen. Insbesondere wenn das Kommunikationssystem auf mehreren Kanälen sendet, sind am "Start-up" nur solche Knoten zu beteiligen, welche auf allen Kanälen senden. Nach einem fehlerfreien "Start-up" START-UP erfolgt ein Wechsel in den normalen Betriebsmodus ("Normal Operation Mode") NORM_OP.

Aktive Knoten, welche zeitlich synchronisiert sind, werden als konsistent bezeichnet. Konsistente Knoten bilden eine Clique. Sind mehr als drei Knoten an einem "Start-up" START-UP beteiligt, so besteht die Gefahr, dass als Ergebnis des "Start-ups" START-UP mehrere Cliquen vorliegen. Cliquen senden nicht zeitlich synchronisiert. Liegen mehrere Cliquen vor, so stören diese sich gegenseitig. Einem Aufruf der Funktionen Func(NORM_OP) des normalen Betriebsmodus wird daher erfindungsgemäß eine Cliquenerkennung CLIQUE_DETECT sowie gegebenenfalls eine Cliquenauflösung CLIQUE_BREAKUP vorangestellt. Knoten eines Kommunikationssystems können zugeschaltet werden, während bereits eine Kommunikation läuft. Dabei ist es denkbar, dass ein Knoten vorhanden ist, welcher nicht in die bestehende Kommunikation eingebunden ist und eine neue Clique initiieren will. Die Gefahr einer Cliquenbildung besteht somit unabhängig davon, ob bereits eine zeitlich synchronisierte Kommunikation aktiver Knoten existiert.

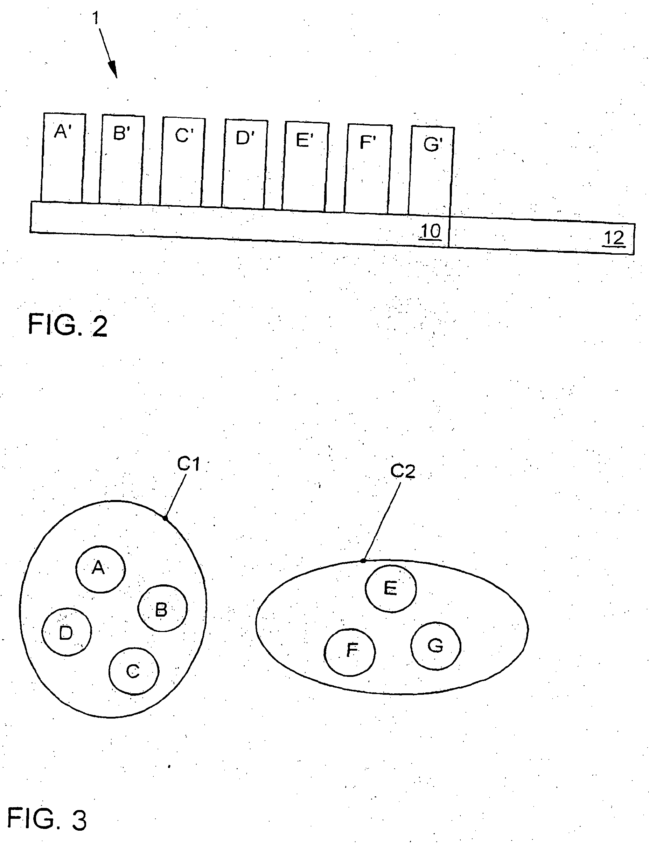

Fig. 2 zeigt einen Periodenzyklus 1 eines in Fig. 2 nicht dargestellten Kommunikationssystems mit sieben Knoten A - G. Der Periodenzyklus 1 umfasst ein statisches Segment 10, sowie ein dynamisches Segment 12. Das statische Segment 10 ist mit sieben Zeitschlitzen A' - G' gleicher Länge ausgebildet. Das dynamische Segment 12 ist im dargestellten Ablaufplan leer, so dass dieses Segment einer sendefreien Zeit ("Idle time"). entspricht. Jeder Zeitschlitz A'- G' ist für einen Frame eines Knotens A - G reserviert. Die Reihenfolge der Frames im dargestellten Ablaufplan ist A, B, C, D, E, F, G. Jeder Knoten sendet seinen Frame ausschließlich in dem dafür reservierten Zeitschlitz. Im dargestellten Beispiel sendet jeder Knoten nur einen Frame. Für einen Knoten können jedoch auch mehrere Frames innerhalb eines Periodenzyklus reserviert sein.

Fig. 3 zeigt schematisch eine mögliche Cliquenbildung bei einem Kommunikationssystem mit sieben "Start-up"-Knoten A - G. Dabei gehören die Knoten A - D einer Clique C1 und die Knoten F - G einer Clique C2 an. Selbstverständlich sind andere Cliquenbildungen ebenso denkbar.

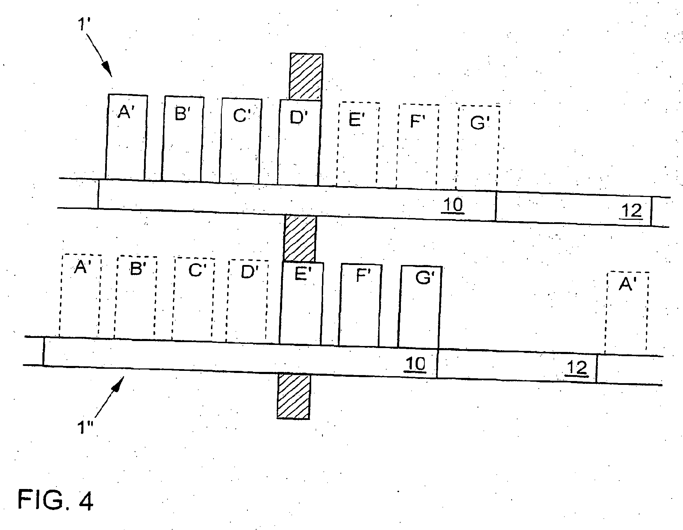

Fig. 4 zeigt einen möglichen zeitlichen Verlauf bei einem Kommunikationssystem mit einer Cliquenbildung gemäß Fig. 3. Die Knoten A - G senden auf mindestens einem gemeinsamen Kanal ihre Frames gemäß dem in Fig. 2 dargestellten vorgegebenen Ablaufplan. Die Kommunikation ist jedoch nicht zeitlich synchronisiert. So beginnt ein Periodenzyklus 1', in welchem die Knoten A - D der Clique C1 senden, nicht zeitgleich mit einem Periodenzyklus 1", in welchem die Knoten E - G der Clique C2 senden. Zeitschlitze für Frames, welche nicht der Clique angehören, bleiben jeweils leer. Sie sind in Fig. 4 gestrichelt dargestellt. Aufgrund der zeitlich versetzten Übertragung kommt es zu einer Überlagerung der Frames. Dies führt dazu, dass die Frames der Knoten D und E an die anderen Knoten ihrer jeweiligen Clique fehlerhaft übertragen werden. Daneben ist es denkbar, dass Nachrichten mehrerer Knoten von der Überlagerung betroffen sind oder eine Clique ausschließlich in der sendefreien Zeit einer zweiten Clique sendet

Aufgrund der fehlenden Synchronisation ist ein fehlerfreier Betrieb des Systems im normalen Betriebsmodus nicht möglich. Daher wird -wie in Fig. 1 dargestellt - dem Start des normalen Betriebsmodus eine Cliquenerkennung und -auflösung vorangestellt.

In einer ersten Ausführungsform sind Cliquen anhand von Störungen erkennbar. Störungen sind beispielsweise eine fehlende Kommunikation mit einem Knoten und/oder einer fehlerbehaftete Kommunikation mit anderen Knoten. Aufgrund der erkannten Cliquen wird mindestens ein Knoten aus seiner Clique gelöst und reintegriert.

Das Lösen und die anschließende Reintegration erfolgen über ein Reset des Knotens. Nach dem Hochfahren erkennt der Knoten die bereits vorhandene Busaktivität und integriert sich in die vorhandene Kommunikation. Der Knoten kann sich für eine Reintegration seiner alten Clique oder einer anderen Clique anschließen.

Die Reintegration erfolgt gemäß einer Ausführungsform mit dem Prinzip der größten Clique. Im Beispiel wird durch jeden Knoten ein Frame pro Periodenzyklus gesendet. Typischerweise wird im "Start-up" durch einen beteiligten Knoten nur ein Frame gesendet. Die Anzahl der Zeitschlitze ist daher gleich der Anzahl der Knoten. Während der Reintegration kommunizieren die Knoten vorzugsweise bereits gemäß einem Ablaufplan des normalen Betriebsmodus. Dabei können pro Periodenzyklus mehrere Zeitschlitze für einen Knoten reserviert sein. Die größte Clique ist daher einheitlich definiert als die Clique, welche die meisten Zeitschlitze belegt.

Für die Auflösung können fünf verschiedene Fälle unterschieden werden: ein Lösen des Knotens D aus seiner Clique C1, ein Lösen des Knotens D aus seiner Clique C1 mit anschließenden Lösen des Knotens E aus seiner Clique C2, ein gleichzeitiges Lösen der Knoten D und E aus den Cliquen C1, C2, ein Lösen des Knotens E aus seiner Clique C2 mit einem anschließenden Lösen des Knotens D aus seiner Clique C1 und einem Lösen des Knotens E aus seiner Clique C2.

Dabei ist zu beachten, dass ein Knoten des Systems ohne besondere Maßnahmen nicht über das Vorgehen anderer Knoten informiert ist. Eine Entscheidung für ein Lösen und/öder den Zeitpunkt für ein Lösen wird daher ohne Wissen über das Vorgehen andere Knoten getroffen.

Lösen sich beide Knoten gleichzeitig, so umfasst die Clique C1 während der Reintegrationsphase drei Knoten A, B, C und die Clique C2 zwei Knoten F, G. Die Knoten D, E schließen sich nach dem Prinzip der größten Clique der Clique C1 an, so dass diese weiter wächst und die Clique C2 verkleinert wird. Gleiches gilt, wenn der Knoten D sich erst nach einer Reintegration des Knotens E aus seiner Clique C1 löst. Auch wenn nur der Knoten E aus seiner Clique C2 gelöst wird, schließt er sich nach dem Prinzip der größten Clique der Clique C1 an.

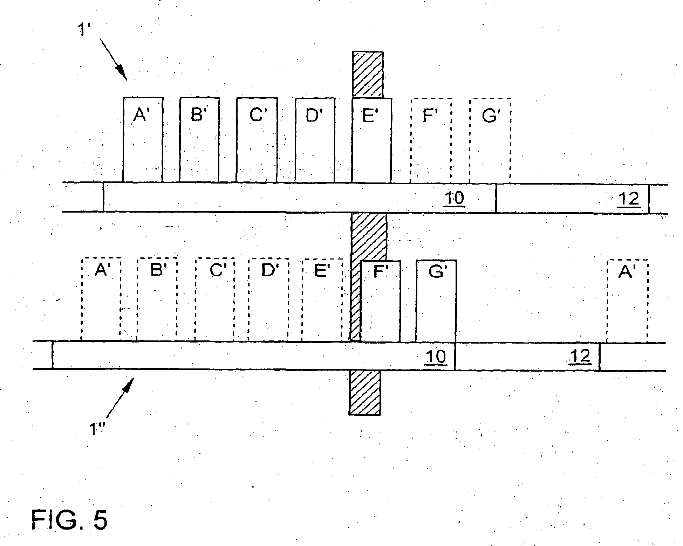

Fig. 5 zeigt das Ergebnis nach einer Reintegration in den beschriebenen Fällen. Die Kommunikation ist dabei noch immer gestört, da noch immer Cliquen vorhanden sind. Zum Auflösen der Cliquen wird daher erneut mindestens ein Knoten aus einer Clique gelöst.

Es ist auch denkbar, dass nur der Knoten D aus der Clique C1 gelöst wird. Dann liegen zwei Cliquen mit jeweils drei Mitgliedern vor. Schließt sich der Knoten D gemäß dem Prinzip der größten Clique einer der beiden Cliquen an, so entspricht das Ergebnis der Ausgangssituation. Gleiches gilt, wenn sich der Knoten E erst nach einer Reintegration des Knotens D aus seiner Clique löst und der Knoten D sich der Clique C2 angeschlossen hat. Ohne zeitliche Begrenzungen für eine maximale Dauer des Hochlaufs sind derartige Rekursionen unproblematisch. Das Vorgehen des Lösens und der Reintegration wird wiederholt. Um exakte Wiederholungen zu vermeiden ist es beispielsweise denkbar, Zufallszahlen für einen zeitlichen Versatz einzuführen. Ein Lösen eines Knotens aus seiner Clique erfolgt dann nach Ablauf einer Zeitdauer, welche durch eine Zufallszahl bestimmt wird.

Mit wachsender Anzahl an "Start-up"-Knoten wächst jedoch die Anzahl der Fälle, welche beim Lösen eines oder mehrerer Knoten und anschließender Reintegration eine Rekursion als Folge haben. Insbesondere bei sicherheitsrelevanten Anwendungen, beispielsweise im Automobilbereich, sind jedoch hohe Anforderungen an die Zeit gestellt, nach welcher ein System spätestens kommunikationsbereit sein muss.

Daher ist eine Auflösung, welche Rekursionen unbegrenzt toleriert, im Automobilbereich im Regelfall nicht ausreichend. Um Rekursionen zu vermeiden, wird vor einer Auflösung der Cliquen bestimmt, welche Clique aller Voraussicht nach, nicht Zielclique ist, und nur Knoten aus dieser oder bei größeren Systemen diesen Cliquen gelöst.

Da jeder Knoten ausschließlich über eine lokale Sicht auf das Kommunikationssystem verfügt, ist ein direkter Größenvergleich der Cliquen ohne weitere Maßnahmen nicht möglich.

Die Anzahl der vorhandenen Zeitschlitze n*_slots* ist durch jeden Knoten ermittelbar. Die Anzahl n*_slots* entspricht der Anzahl an Knoten, welche maximal an einer Kommunikation beteiligt sein können. Da ein Knoten mehrere Zeitschlitze belegen kann, ist es möglich, dass die Anzahl der tatsächlich vorhandenen Knoten kleiner ist als die Anzahl n*_slots.*

Außerdem ist durch jeden Knoten eine Anzahl n_*ThisClique* an Zeitschlitzen ermittelbar, mit welchen eine fehlerfreie Kommunikation möglich ist. Die zugehörigen Knoten sind eindeutig der Clique des Knotens zuordenbar.

Ebenso eindeutig ist eine Anzahl n_*NotThisClique* an Zeitschlitzen ermittelbar, in welchen kein Frame empfangen wurde. Die zugehörigen Knoten gehören entweder einer weiteren Clique an oder sind nicht im System vorhanden. Informationen, ob ein Knoten im System vorhanden ist, können beispielsweise über Sollverbaulisten zur Verfügung gestellt werden.

Zeitschlitze, welche nicht leer sind aber keinen gültigen Frame übermitteln, können weder eindeutig der Clique zugeordnet werden, noch kann ihre Mitgliedschaft zu der Clique ausgeschlossen werden. Die Anzahl derartiger Zeitschlitze ist n_*XClique*. Insgesamt muss gelten: n*_slots* = n*_ThisClique* + n*_XClique* + n_*NotThisClique*

Diese Information kann neben anderen Informationen durch einen Knoten herangezogen werden, um zu entscheiden, ob es sich bei seiner Clique um eine kleine Clique handelt.

In einer anderen Ausführungsform werden Cliquen nach dem Masterprinzip erkannt und gegebenenfalls aufgelöst.

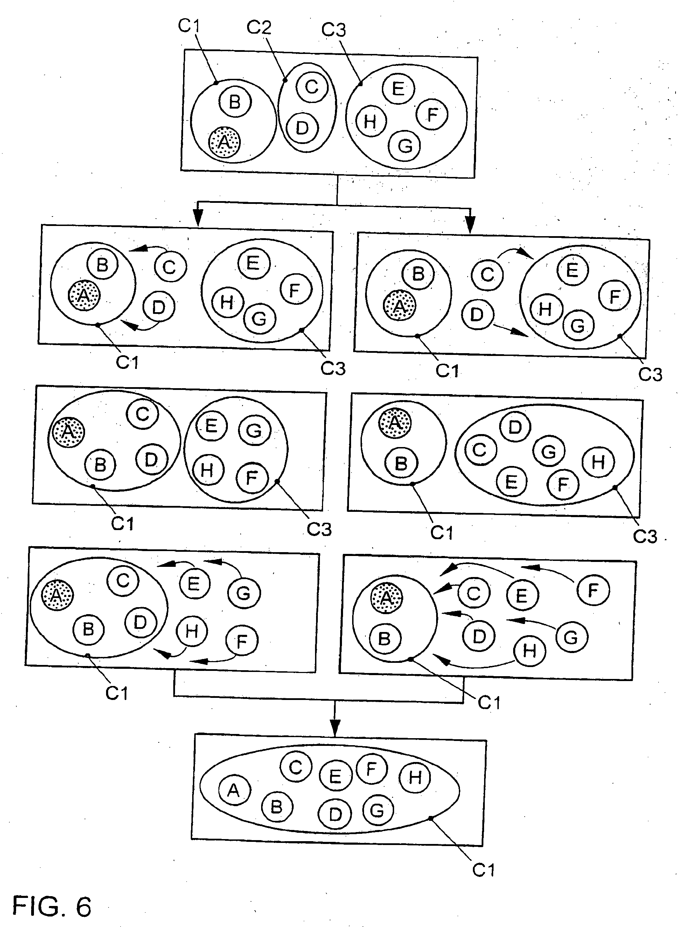

Fig. 6 zeigt ein System umfassend sieben Knoten A - G, wobei einem Knoten A eine Masterfunktion zugeordnet ist. Neben einer Nachricht umfasst ein Frame einen Header. Im Header ist beispielsweise eine Kennung eines Frames und/oder einer Nachricht übermittelbar. Im FlexRay Format ist ein Bit des Headers reserviert, um zu kennzeichnen, ob ein Knoten für eine Synchronisation heranzuziehen ist. Eine Kennzeichnung eines Knotens mit Masterfunktion ist ebenfalls durch den Header möglich.

In dem in Fig. 6 abgebildeten Szenario liegen nach dem "Start-up" drei Cliquen C1, C2 und C3 vor. Die Clique C1 umfasst neben dem Knoten A mit Masterfunktion noch einen Knoten B. Die Clique C2 umfasst die Knoten C, D und die Clique C3 umfasst die Knoten E- G.

Die Cliquen C2 und C3 registrieren, dass der Knoten A mit Masterfunktion nicht ihrer Clique angehört und bereiten ihre Auflösung vor.

Im dargestellten Szenario erfolgt zunächst nur eine Auflösung der Clique C2. Für die Reintegration sind keine Vorschriften gegeben. Die Wahrscheinlichkeit, dass die Knoten C, D nach dem Hochfahren erneut eine eigene Clique bilden ist sehr gering, so dass diese Möglichkeit vernachlässigbar ist. Kommt es dennoch zu einer erneuten Cliquenbildung der Knoten C, D, so wird die Auflösung der Clique wiederholt.

Bilden die Knoten C, D keine eigene Clique, so schließen sie sich entweder der Clique C1 oder der Clique C3 an. Das Szenario für ein Anschließen der Knoten C und D an die Clique C1 ist in Fig. 6 links dargestellt. Nachdem sich die Knoten C, D der Clique C1 angeschlossen haben, liegen zunächst zwei Cliquen vor, die jeweils vier Knoten umfassen. Im nächsten Schritt erfolgt eine Auflösung der Clique C3. In Fig. 6 rechts ist ein Szenario für ein Anschließen der Knoten C, D an die Clique C3 dargestellt. Dabei liegen zunächst ebenfalls zwei Cliquen vor, wobei die Clique C1 unverändert die Knoten A, B enthält, während die Clique C3 um die Knoten C, D anwächst. Im nächsten Schritt wird die Clique C3 aufgelöst und die Knoten schließen sich der Clique C1 an.

Es ist auch denkbar, dass sich die Knoten C und D unterschiedlichen Cliquen anschließen. In jedem Fall werden Cliquen aufgelöst, welche nicht den Knoten A mit Masterfunktion beinhalten.

Anstelle eines Auflösens der Clique durch einen Reset aller Mitglieder ist es denkbar, dass die Knoten einzeln aus der Clique gelöst werden. Ein Reset erfolgt dann lediglich für Knoten, die nicht fehlerfrei senden und/oder empfangen.

Alle bisherigen Betrachtungen beruhen auf der Annahme, dass sowohl das Bussystem als auch die einzelnen Knoten fehlerfrei sind. Zur Erkennung derartiger Fehler sind die erfindungsgemäßen Gegenstände mit den entsprechenden bekannten Algorithmen zu verknüpfen.

Insbesondere bei einer Erkennung und/oder Auflösung von Cliquen nach dem Masterprinzip führt ein Defekt im Knoten mit Masterfünktion dazu, dass keine Cliquen dauerhaft bildbar sind. Der Defekt kann dabei ein Defekt des Headers und/oder ein Defekt des zugehörigen Steuergeräts sein.

Vorzugsweise wird ein derartiger Defekt automatisch erkannt und eine andere Routine zum Erkennen und/oder Auflösen von Cliquen aufgerufen. Es ist jedoch auch denkbar, dass aufgrund eines erkannten Defekts einem anderen Steuergerät eine Masterfunktion zugeordnet wird.

Ein Defekt ist beispielsweise durch einen Zeitablauf erkennbar Daneben ist es denkbar, die Anzahl an Resets pro Knoten zu begrenzen.

## Patentansprüche

1. Verfahren zum Hochfahren mindestens eines Knotens eines mindestens teilweise zeitgesteuerten Kommunikationssystems mit einem statisch vorgegebenen Ablaufplan, wobei das Kommunikationssystem ein periodisches Übertragungsmuster aufweist und ein Periodenzyklus eine bestimmte Anzahl an Zeitschlitzen umfasst, die in fester Reihenfolge abgearbeitet werden, der Knoten mindestens eine Nachricht in einem Frame sendet und dem Frame ein Zeitschlitz zugeordnet ist, umfassend einen Start-up-Schritt, wobei der Knoten in eine bestehende Kommunikation integriert wird oder für einen Start einer Kommunikation mit mindestens einem zweiten Knoten zeitlich synchronisiert wird, und das Verfahren einen Aufruf mindestens einer Funktion des Knotens normaler Betriebsmodus umfasst, wobei
dem Aufruf der Funktion des normalen Betriebsmodus mindestens eine Erkennung von Cliquen (C1, C2, C3) vorangestellt wird und
bei einer Erkennung von Cliquen (C1, C2, C3) mindestens der hochgefahrene Knoten (A - G) des Kommunikationssystems einen Reset durchführt, **dadurch gekennzeichnet, dass**
einem Knoten (A) des Kommunikationssystems eine Masterfunktion zugeordnet wird und die Masterfunktion durch kommunizierende Knoten (B - G) erkennbar ist, wobei der hochgefahrene Knoten nach dem Prinzip der Masterclique aus der Clique gelöst und/oder reintegriert wird, wobei, wenn der Knoten mit Masterfunktion nicht der Clique angehört, sich ein Knoten aus der Clique löst oder die ganze Clique auflöst, und wobei das Prinzip der Masterclique umfasst, dass die Clique mit dem Knoten mit Masterfunktion die Zielclique ist, in die der höchgefahrene Knoten reintegriert wird.

2. Verfahren nach Anspruch 1, **dadurch gekennzeichnet, dass** eine Erkennung von Cliquen (C1, C2) durch einen Knoten (A - G) mindestens eine Beurteilung einer Störungsart und/oder -häufigkeit empfangener und/oder gesendeter Frames umfasst.

3. Verfahren nach einem der Ansprüche 1 oder 2, **dadurch gekennzeichnet, dass** einem Knoten (A - G) eine Sollverbauliste übermittelt wird und die Sollverbauliste zu Erkennung von Cliquen (C1, C2, C3) durch den Knoten (A - G) ausgewertet wird.

4. Verfahren nach einem Ansprüche 1 bis 3, **dadurch gekennzeichnet, dass** sich mindestens ein Knoten (D, E) aus seiner Clique (C1, C2) löst, dessen Frame fehlerhaft übertragen wird.

5. Verfahren nach einem Ansprüche 1 bis 4, **dadurch gekennzeichnet, dass** der Knoten (A - G) nach dem Prinzip der größten Clique reintegriert wird wobei die größte Clique definiert ist als die Clique, die die meisten Zeitschlitze eines Periodenzyklus belegt.

6. Vorrichtung zum Hochfahren mindestens eines Knotens eines mindestens teilweise zeitgesteuerten Kommunikationssystems mit einem statisch vorgegebenen Ablaufplan, wobei das Kommunikationssystem ein periodisches Übertragungsmuster aufweist und ein Periodenzyklus eine bestimmte Anzahl an Zeitschlitzen umfasst, die in fester Reihenfolge abgearbeitet werden, durch den Knoten mindestens eine Nachricht in einem Frame sendbar ist und dem Frame ein Zeitschlitz zugeordnet ist, der Knoten mindestens eine Recheneinheit für die Kommunikation umfasst, wobei durch die Recheneinheit ein Start-up-Schritt und ein Aufruf mindestens einer Funktion des Knotens normaler Betriebsmodus durchführbar ist und durch den Start-up-Schritt der Knoten in eine bestehende Kommunikation integrierbar ist oder für einen Start einer Kommunikation mit mindestens einem zweiten Knoten zeitlich synchronisierbar ist, wobei
durch die Recheneinheit vor dem Aufruf der Funktion des normalen Betriebsmodus mindestens eine Erkennung von Cliquen (C1, C2, C3) durchführbar ist und
bei einer Erkennung von Cliquen (C1, C2, C3) ein Reset mindestens des hochgefahrenen Knotens (A - G) des Kommunikationssystems durchführbar ist, **dadurch gekennzeichnet, dass**
einem Knoten (A) des Kommunikationssystems eine Masterfunktion zugeordnet ist und die Masterfunktion durch kommunizierende Knoten (B - G) erkennbar ist, wobei der hochgefahrene Knoten nach dem Prinzip der Masterclique aus der Clique lösbar und/oder reintegrierbar ist,
wobei, wenn der Knoten mit Masterfunktion nicht der Clique angehört, sich ein Knoten aus der Clique löst oder die ganze Clique auflöst; und wobei das Prinzip der Masterclique umfasst, dass die Clique mit dem Knoten mit Masterfunktion die Zielclique ist, in die der hochgefahren Knoten reintegriert wird.

7. Vorrichtung nach Anspruch 6, **dadurch gekennzeichnet, dass** eine Erkennung von Cliquen (C1, C2) durch einen Knoten (A - G) mindestens eine Beurteilung einer Störungsart und/oder -häufigkeit empfangener und/oder gesendeter Frames umfasst.

8. Vorrichtung nach einem der Ansprüche 6 oder 7, **dadurch gekennzeichnet, dass** einem Knoten (A - G) eine Sollverbauliste übermittelbar ist und die Sollverbauliste zu Erkennung von Cliquen (C1, C2, C3) durch den Knoten (A - G) auswertbar ist.

9. Vorrichtung nach einem der Ansprüche 6 bis 8, **dadurch gekennzeichnet, dass** mindestens ein Knoten (D, E) aus seiner Clique (C1, C2) lösbar ist, dessen Frame fehlerhaft übertragen wird.

10. "Vorrichtung nach einem der Ansprüche 6 bis 9, **dadurch gekennzeichnet, dass** der Knoten (A - G) nach dem Prinzip der größten Clique reintegrierbar ist, wobei die größte Clique definiert ist als die Clique, die die meisten Zeitschlitze eines Periodenzyklus belegt."

## Claims

1. Method for starting up at least one node of an at least partially time-controlled communication system with a statically predefined schedule, the communication system having a periodic transmission pattern and a period cycle comprising a particular number of time slots which are processed in a fixed sequence, the node transmitting at least one message in a frame and a time slot being assigned to the frame, comprising a start-up step, the node being integrated into existing communication or being temporally synchronized with at least one second node in order to start communication, and the method comprising calling at least one function of the node in the normal operating mode,
the calling of the function in the normal operating mode being preceded by at least detection of cliques (C1, C2, C3), and
at least the node (A-G) of the communication system which has been started up carrying out a reset if cliques (C1, C2, C3) are detected, **characterized in that**
a master function is assigned to a node (A) of the communication system and the master function can be detected by communicating nodes (B-G), the node which has been started up being released from the clique and/or reintegrated according to the principle of the master clique, in which case, if the node with the master function does not belong to the clique, a node is released from the clique or the entire clique is disintegrated, and the principle of the master clique comprises the fact that the clique having the node with the master function is the target clique into which the node which has been started up is reintegrated.

2. Method according to Claim 1, **characterized in that** detection of cliques (C1, C2) by a node (A-G) comprises at least assessment of a type and/or frequency of interference in received and/or transmitted frames.

3. Method according to either of Claims 1 and 2, **characterized in that** a desired installation list is transmitted to a node (A-G) and the desired installation list is evaluated by the node (A-G) in order to detect cliques (C1, C2, C3).

4. Method according to one of Claims 1 to 3, **characterized in that** at least one node (D, E) whose frame is incorrectly transmitted is released from its clique (C1, C2).

5. Method according to one of Claims 1 to 4, **characterized in that** the node (A-G) is reintegrated according to the principle of the largest clique, the largest clique being defined as the clique which occupies most time slots in a period cycle.

6. Apparatus for starting up at least one node of an at least partially time-controlled communication system with a statically predefined schedule, the communication system having a periodic transmission pattern and a period cycle comprising a particular number of time slots which are processed in a fixed sequence, the node being able to transmit at least one message in a frame and a time slot being assigned to the frame, the node comprising at least one computing unit for communication, the computing unit being able to carry out a start-up step and to call at least one function of the node in the normal operating mode and, as a result of the start-up step, the node being able to be integrated into existing communication or being able to be temporally synchronized with at least one second node in order to start communication,
the computing unit, before calling the function in the normal operating mode, at least being able to detect cliques (C1, C2, C3), and
at least the node (A-G) of the communication system which has been started up being able to be reset if cliques (C1, C2, C3) are detected, **characterized in that**
a master function is assigned to a node (A) of the communication system and the master function can be detected by communicating nodes (B-G), the node which has been started up being able to be released from the clique and/or reintegrated according to the principle of the master clique, in which case, if the node with the master function does not belong to the clique, a node is released from the clique or the entire clique is disintegrated, and the principle of the master clique comprises the fact that the clique having the node with the master function is the target clique into which the node which has been started up is reintegrated.

7. Apparatus according to Claim 6, **characterized in that** detection of cliques (C1, C2) by a node (A-G) comprises at least assessment of a type and/or frequency of interference in received and/or transmitted frames.

8. Apparatus according to either of Claims 6 and 7, **characterized in that** a desired installation list can be transmitted to a node (A-G) and the desired installation list can be evaluated by the node (A-G) in order to detect cliques (C1, C2, C3).

9. Apparatus according to one of Claims 6 to 8, **characterized in that** at least one node (D, E) whose frame is incorrectly transmitted can be released from its clique (C1, C2).

10. Apparatus according to one of Claims 6 to 9, **characterized in that** the node can be released from the clique and/or reintegrated according to the principle of the largest clique, the largest clique being defined as the clique which occupies most time slots in a period cycle.

## Revendications

1. Procédé de démarrage d'au moins un noeud d'un système de communication au moins partiellement commandé temporellement, comportant une planification prédéterminée de manière statique, dans lequel le système de communication présente un profil de transmission périodique et dans lequel un cycle de période comprend un nombre prédéterminé de créneaux temporels qui sont traités selon une succession fixe, dans lequel le noeud émet au moins un message dans une trame et un créneau temporel est associé à la trame, comprenant une étape de démarrage, dans lequel le noeud est intégré à une communication en cours ou est synchronisé temporellement pour un démarrage d'une communication avec au moins un second noeud, et le procédé comprend un appel à au moins une fonction du noeud en mode de fonctionnement normal, dans lequel au moins une détection de cliques (C1, C2, C3) précède l'appel à la fonction en mode de fonctionnement normal et, lors d'une détection de cliques (C1, C2, C3), au moins le noeud démarré (A-G) du système de communication effectue une réinitialisation,
**caractérisé en ce qu'**une fonction maîtresse est associée à un noeud (A) du système de communication et **en ce que** la fonction maîtresse peut être détectée par des noeuds en communication (B-G), dans lequel le noeud démarré est séparé de la clique et/ou y est réintégré selon le principe de la clique maîtresse, dans lequel, lorsque le noeud ayant la fonction maîtresse n'appartient pas à la clique, un noeud se sépare de la clique ou la totalité de la clique se dissout, et dans lequel le principe de la clique maîtresse comprend le fait que la clique ayant le noeud présentant la fonction maîtresse est la clique cible dans laquelle le noeud démarré est réintégré.

2. Procédé selon la revendication 1, **caractérisé en ce qu'**une détection de cliques (C1, C2) comprend au moins un jugement, effectué par un noeud (A-G), d'un type et/ou d'une fréquence de perturbation de trames reçues et/ou émises.

3. Procédé selon l'une quelconque des revendications 1 ou 2, **caractérisé en ce qu'**une liste d'assemblage nominale est transmise à un noeud (A-G) et la liste d'assemblage nominale est évaluée par le noeud (A-G) pour détecter des cliques (C1, C2, C3).

4. Procédé selon l'une quelconque des revendications 1 à 3, **caractérisé en ce qu'**au moins un noeud (D, E) dont la trame est transmise de manière erronée se sépare de sa clique (C1, C2).

5. Procédé selon l'une quelconque des revendications 1 à 4, **caractérisé en ce que** le noeud (A-G) est réintégré selon le principe de la clique la plus grande, et **en ce que** le noeud peut être séparé de la clique et/ou y être réintégré selon le principe de la clique maîtresse, dans lequel la clique la plus grande est définie comme étant la clique qui présente la plupart des créneaux temporels d'un cycle de période.

6. Dispositif de démarrage d'au moins un noeud d'au moins un système de communication au moins partiellement commandé temporellement, comportant une planification prédéterminée de manière statique, dans lequel le système de communication présente un profil de transmission périodique et dans lequel un cycle de période comprend un nombre déterminé de créneaux temporels qui sont traités selon une succession fixe, dans lequel au moins un message peut être émis dans une trame par le noeud et un créneau temporel est associé à la trame, le noeud comprend au moins une unité de calcul destinée à la communication, dans lequel une étape de démarrage et un appel à au moins une fonction du noeud en mode de fonctionnement normal peut être effectués par l'unité de calcul et le noeud peuvent être intégré à une communication en cours par l'étape de démarrage ou peut être synchronisé temporellement avec au moins un second noeud pour un démarrage d'une communication, dans lequel
au moins une détection de cliques (C1, C2, C3) peut être effectuée par l'unité de calcul avant l'appel à la fonction en mode de fonctionnement normal et,
lors d'une détection de cliques (C1, C2, C3), une réinitialisation d'au moins le noeud démarré (A-G) du système de communication peut être effectuée, **caractérisé en ce qu'**une fonction maîtresse est associée au noeud (A) du système de communication et **en ce que** la fonction maîtresse peut être détectée par des noeuds en communication (B-G), dans lequel le noeud démarré peut être séparé de la clique et/ou y être réintégré selon le principe de la clique maîtresse, dans lequel, lorsque le noeud ayant la fonction maîtresse n'appartient pas à la clique, un noeud se sépare de la clique ou la totalité de la clique se dissout, et dans lequel le principe de la clique maîtresse comprend le fait que la clique ayant le noeud présentant la fonction maîtresse est la clique cible dans laquelle le noeud démarré est réintégré.

7. Dispositif selon la revendication 6, **caractérisé en ce qu'**une détection de cliques (C1, C2) comprend au moins un jugement, effectué par un noeud (A-G), d'un type et/ou d'une fréquence de perturbation de trames reçues et/ou émises.

8. Dispositif selon l'une quelconque des revendications 6 ou 7, **caractérisé en ce qu'**une liste d'assemblage nominale peut être transmise à un noeud (A-G) et **en ce que** la liste d'assemblage nominale peut être évaluée par le noeud (A-G) pour détecter des cliques (C1, C2, C3).

9. Dispositif selon l'une quelconque des revendications 6 à 8, **caractérisé en ce qu'**au moins un noeud (D, E) dont la trame est transmise de manière erronée peut être séparé de sa clique (C1, C2).

10. Dispositif selon l'une quelconque des revendications 6 à 9, **caractérisé en ce que** le noeud peut être séparé de la clique et/ou y être réintégré selon le principe de la clique la plus grande, dans lequel la clique la plus grande est définie comme étant la clique qui présente la plupart des créneaux temporels d'un cycle de période.
